Europäisches Patentamt

(19) **European Patent Office**

Office européen des brevets

(11) Publication number: **0 023 157**
**B1**

(12) **EUROPEAN PATENT SPECIFICATION**

(45) Date of publication of patent specification: **10.08.83**    (51) Int. Cl.³: **G 01 N 27/28**

(21) Application number: **80302502.2**

(22) Date of filing: **23.07.80**

(54) Liquid transport device.

(30) Priority: **23.07.79 US 59816**
**10.03.80 US 128413**
**23.04.80 US 142942**

(43) Date of publication of application:
**28.01.81 Bulletin 81/4**

(45) Publication of the grant of the patent:
**10.08.83 Bulletin 83/32**

(84) Designated Contracting States:
**AT BE CH DE FR GB IT LI NL SE**

(56) References cited:
**CH - A - 564 770**
**DE - A - 2 854 444**
**FR - A - 1 444 146**
**FR - A - 2 394 801**

**RESEARCH DISCLOSURE, no. 175, November 1978, page 22, publication no. 17517 J. O. PAUL et al.: "Device for determining ionic activity"**

(73) Proprietor: **EASTMAN KODAK COMPANY**
**Patent Department 343 State Street**
**Rochester, New York 14650 (US)**

(72) Inventor: **Columbus, Richard Lewis**
**Kodak Park**
**Rochester New York (US)**

(74) Representative: **Pepper, John Herbert et al,**
**KODAK LIMITED Patent Department P.O. Box 114**
**190 High Holborn**
**London WC1V 7EA (GB)**

# Liquid transport device

The present invention relates to liquid transport devices through which liquid flows by virtue of capillarity.

In EP—A—0014797 (Application No. 79302338.3) published on 3 Sept. 1980, there is disclosed a liquid transport device comprising surfaces bounding a zone through which liquid may flow by virtue of capillary attraction between the liquid and the surfaces bounding the zone. In one of the embodiments disclosed therein, flow is directed to a plurality of individual test areas. However, all of those individual test areas are provided by opposing surfaces which are extensions of the pair of surfaces bounding the main transport zone. That is, each separate test area branch extends from an opening formed by both opposing surfaces bounding the main zone. Although such branch areas are highly useful, this prior device has a problem in that there is a limit to the number of branches that can extend from openings formed by both the opposing walls.

The present invention as defined in Claim 1 overcomes this problem by providing a second zone through which liquid may flow by virtue of capillary attraction between the liquid and the surfaces bounding the second zone, the second zone being in communication with the first mentioned zone through an aperture which is located in the plane of one surface bounding the first-mentioned zone, and by the aperture being so configured as to ensure complete wetting of the surfaces bounding the second zone downstream of the aperture and having an area greater than 0.2 mm².

The device in accordance with the present invention has the advantage that more tests can be conducted in zones corresponding to the second zone all of which lead off the first-mentioned zone through only one of the surfaces bounding the first-mentioned zone. Additionally, the diverting aperture according to a feature of the present invention provides capillary flow in a branch zone of sufficient cross-sectional area to properly wet a solid test element at the end of the zone. A further advantage is that if the second zone is transporting liquid to a test element that is area dependent, such as an ion-selective electrode, the cross-sectional area of flow of liquid to the test element is large enough to provide a useful signal. This is achieved because the radius of curvature of the meniscus in the second transport zone is such as is useful for wetting solid test elements. Also, larger volumes of liquid are provided for testing. As used herein, "greater than 0.2 mm²" means greater by an amount which is statistically significant, for example, is greater than variations produced by experimental error in measuring the area.

In one embodiment of the present invention, the aperture has at least two flow portions.

Each flow portion either a) has a ratio of length to width, measured in a plane transverse to the direction of liquid flow through the flow portion, between 2.5 and 10.0, or b) has a cross-sectional flow-through area no greater than about 0.2 mm², whereby liquid will completely fill the aperture and flow therethrough while liquid flow continues in the first-mentioned zone. The term "flow portion" is to be understood as having the meaning later herein defined. The ability to form the aperture in this manner gives freedom of design.

A particularly advantageous embodiment of the present invention is one in which there is a test element in the second zone, the test element being for testing the liquid diverted into the second zone.

The test element may be disposed adjacent the aperture and may also be an ion-selective electrode.

In one embodiment the direction of liquid flow through the aperture is generally perpendicular to the direction of liquid flow through the first-mentioned zone adjacent the aperture.

In some embodiments the test element is secured to the outer surface of a wall of the transport device, the inner surface of the wall being one of the bounding surfaces of the first-mentioned zone.

Embodiments of the present invention will now be described, by way of example, with reference to the accompanying drawings, in which:

Fig. 1 is a plan view of a device in accordance with the present invention;

Fig. 2 is a fragmentary section view taken generally along the line II—II of Fig. 1;

Fig. 3 is a fragmentary section view taken generally along the line III—III of Fig. 2;

Fig. 4 is a fragmentary section view taken generally along the line IV—IV of Fig. 2;

Figs. 5A—5C are enlarged fragmentary plan views of an embodiment similar to that of Fig. 1, with a portion of top member 14a broken away to illustrate the liquid flow pattern in the device;

Figs. 6A—6C are fragmentary section views taken generally along the lines VIA—VIA to VIC—VIC of Figs. 5A—5C;

Fig. 7 is a section view similar to that of Fig. 2, but illustrating another embodiment;

Fig. 8 is a fragmentary section view taken along the line VIII—VIII of Fig. 7;

Fig. 9A is a fragmentary section view similar to that of Fig. 3, but illustrating portions of further embodiments;

Fig. 9B is a view similar to that of Fig. 9A, but of a comparative example;

Fig. 10 is a plan view of yet another embodiment of the present invention;

Fig. 11 is a fragmentary section view taken generally along the line XI—XI of Fig. 10; and

Figs. 12 and 13 are section views taken generally along the line XII—XII and XIII—XIII respectively, of Figs. 11 and 10.

A device in accordance with the present invention is capable of providing from a single first capillary zone, an increased number of loci for processing or testing liquid supplied thereto. This is achieved by the creation of additional capillary transport zones each of which extends from one of the surfaces of the first zone. This is rendered possible by diverting means that effectively draws off at one of the surfaces bounding the first zone a branch capillary stream while allowing the first capillary stream to continue to flow in the first transport zone. A preferred form of such diverting means is a specially shaped aperture, as hereinafter described.

The descriptions of the embodiments which follow refer to whole blood or blood serum as the liquid being transported. Other liquids can be transported, including other biological liquids and industrial liquids, such as photographic developer solutions.

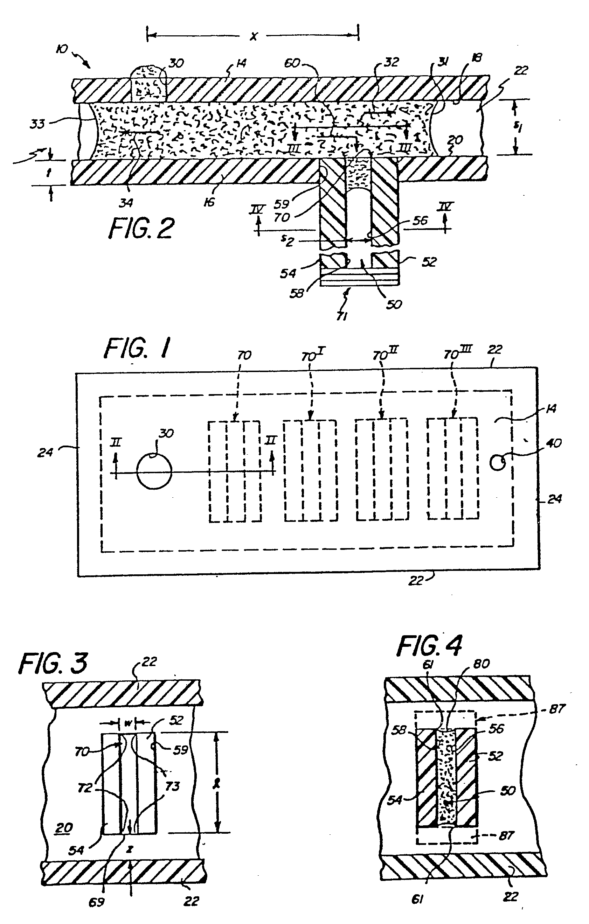

A liquid transport device 10 in accordance with the present invention comprises (Figs. 1—2) a first transport zone 12 bounded by two members 14 and 16 having opposing interior surfaces 18 and 20 (Fig. 2) spaced apart a distance $s_1$, that is effective to induce liquid to flow between the surfaces 18 and 20 by capillary action alone. Sidewalls 22 and 24 (Fig. 1) mount members 14 and 16 in this spaced-apart relationship, with or without bridging studs (not shown) within the zone 12. Walls 22 and 24 are secured to members 14 and 16, for example, by water-insoluble adhesives or ultrasonic bonding.

To permit introduction of liquid into zone 12, a liquid access aperture 30 is provided in member 14 though it could alternatively be provided in member 16. The aperture 30 defines a locus of liquid introduction. A quantity of liquid is deposited at aperture 30, either in drop form, or as a quantity that is injected into the aperture 30. Because of the capillary spacing $s_1$, injecting pressure is not needed in order for the liquid to fill zone 12.

The size of aperture 30 is selected to ensure that the volume of liquid introduced will contact both surfaces 18 and 20, to initiate transport of liquid menisci 31 and 33 through zone 12 in the direction of arrows 32 and 34, respectively (Fig. 2). If a 10 $\mu l$ sized drop is necessary for proper liquid flow, aperture 30 can be, for example, about 1.0 mm to about 5.0 mm in diameter. Alternatively, aperture 30 can have cornered sidewalls (not shown) so as to have the shape of, for example, a hexagon instead of a circle, to ensure more positive movement of the liquid into the aperture 30.

As the liquid advances within zone 12, air is displaced. To vent the air, a vent aperture 40 is provided (Fig. 1) preferably at the end of zone 12 that is opposite to the locus of liquid introduction defined by aperture 30. If required, more than one such vent aperture 40 could be provided. Alternatively, vent aperture 40 can be disposed in one or more of the sidewalls 22 and 24, or in member 16. The size of vent aperture 40 is not critical. Generally, it is smaller than that of aperture 30.

Grooves (not shown) may be provided in surfaces 18 and 20 to control the shape of the menisci 31 and 33 as they advance. Such grooves preferably are mutually parallel within a given surface and the grooves of opposing surface portions are disposed at a finite angle.

It will be readily appreciated that a number of areas are available on surfaces 18 and 20 to process or test the liquid that is transported through zone 12. For example, a portion of zone 12 downstream from meniscus 31 is reserved for microscopic viewing of the liquid, as are a plurality of other portions throughout the zone.

A second liquid capillary transport zone 50 is provided (Figs. 2 and 4) which diverges from first zone 12 so as to create additional areas for testing or processing of the liquid. Zone 50 is bounded by a second pair of members 52 and 54 having opposed interior surfaces 56 and 58, respectively, spaced apart a capillary distance $s_2$ (Fig. 2) that is effective to induce liquid to flow between the surfaces 56 and 58 by capillary action alone. Members 52 and 54 comprise generally planar sheets mounted in an aperture 59 which extends over a portion only of the distance between sidewalls 22. Preferably there is a distance z (Fig. 3) from the aperture edge 69 to each sidewall 22, measuring at least about 2.0 mm. Briding studs (not shown) can be disposed between members 52 and 54 within the second zone 50 to maintain spacing $s_2$. As shown, the width $s_2$ of the zone equals the width w of an aperture 70 where the zone 50 enters the zone 12, but as described hereinafter, spacing $s_2$ can be increased as zone 50 extends away from zone 12. To vent trapped air from zone 50, part or all of edges 61 (Fig. 4) of surfaces 56 and 58, are left open to the atmosphere. Surfaces 56 and 58 can be either grooved or smooth, as described for surfaces 18 and 20.

To divert a portion of the liquid flowing through zone 12 in the direction of arrow 60 into capillary flow zone 50, surfaces 56 and 58 of zone 50 form aperture 70 in the plane of surface 20 at a locus downstream from aperture 30. Aperture 70 is configured to have two characteristics. First, it has a total cross-sectional area, measured transverse to the direction of liquid flow through the aperture, that is greater than 0.2 mm², to ensure that meniscus 80 will wet a test element 71 (Fig. 2) when it reaches that element. Second, it is configured to ensure that the transported liquid completely wets surfaces 56 and 58 at the vicinity of aperture 70, as described in greater detail hereinafter.

Aperture 70 is characterized as a simple aperture, that is, one having only a single flow portion. As used herein, "flow portions" are those parts of the aperture shape that are free of substantial interior corners. Such portions are graphically determinable by sectioning the aperture shape along hypothetical lines connecting the substantial interior corners, if any. An interior corner, in turn, is a marked protruding demarcation in the wall curvature (as seen from inside the aperture) that cannot properly be considered to be an extension of the curvature prior to that demarcation. Mathematically, such corners are locations at which the first derivative of the surface curvature changes abruptly in value. For a simple aperture, the entire cross-sectional flow-through area is the "flow portion". In contrast, a compound aperture has more than one flow portion. Examples are described hereinafter.

The configuration of aperture 70 provides a length "l" (Fig. 3) measured in a plane transverse to the direction of flow through the aperture along arrow 60, that exceeds the width "w" (in the present embodiment, $s_2$) of the aperture. Most preferably, the ratio l/w is between 2.5 and 10.0.

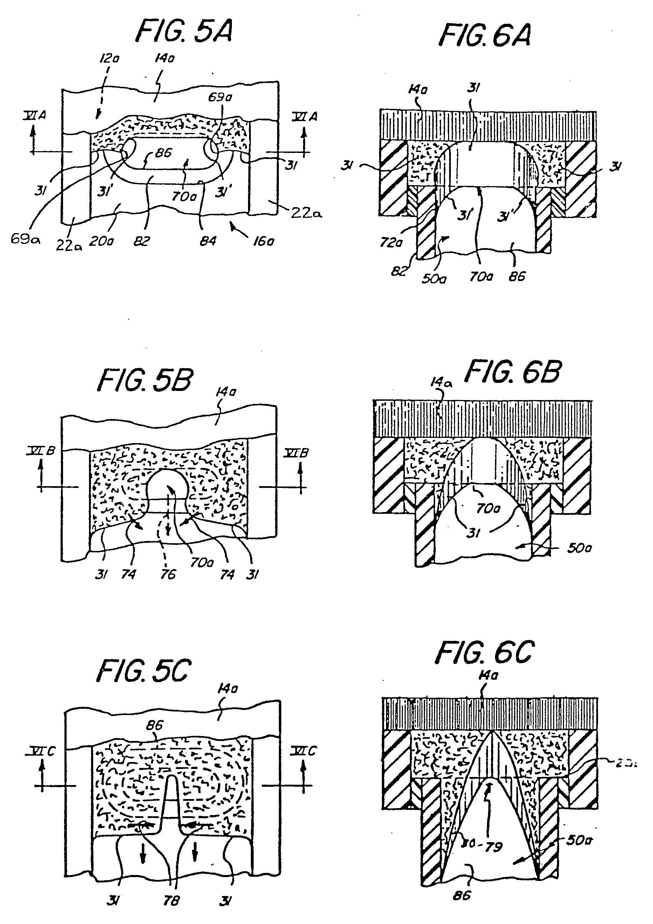

The corners 72 and 73 of aperture 70 are rectangular (Fig. 3) or they can be rounded as shown in Figs. 5A—5C. Rounded corners are generally preferred. In the embodiment of Fig. 3, dimension "l" extends generally perpendicularly to the flow direction designated by arrow 32 (Fig. 2). Alternatively, aperture 70 may be so disposed that "l" is parallel to arrow 32. In such an arrangement, rounded corners are particularly preferred.

The thickness of member 16 defining the aperture, that is, the dimension "t" (Fig. 2) is not believed to be a significant factor in determining the relationship of "l" and "w".

As is indicated in Fig. 1, a number of additional transport zones branch from the single first zone 12, all downstream from access aperture 30 at predetermined locations. These additional zones each have a diverting aperture 70', 70", and 70''', respectively, configured as described for aperture 70.

The dimensions for $s_1$ and $s_2$ are selected to maintain capillary flow of the liquid. Actual values will depend on the liquid being transported and the materials from which members 14 and 16 and 52 and 54 are selected. Preferred values for use with blood serum are 250 microns or less.

Optionally, an additional pair of opposing surfaces can be added to zone 50, in the form of opposing sidewalls 87, shown in phantom in Fig. 4. In such an embodiment, meniscus 80 wets all boundary surfaces and one or more vent apertures are provided in walls 52, 54 or 87.

The opposing surfaces of the second zone can be surfaces of one and the same member shaped as a tube. Reference is now made to Figs. 5A—5C and 6A—6C in which parts similar to those previously described bear the same reference numeral but with the distinguishing suffix "a" appended. Thus, first capillary zone 12a is formed by opposing surfaces of members 14a and 16a, and sidewalls 22a. Aperture 70a is in the plane of surface 20a of member 16a (Fig. 5A) to divert liquid flow into the second zone 50a (Fig. 6A) in the manner described for the previous embodiment. Aperture 70a is the end of the base of a tubular member 82 inserted into an aperture 84 in member 16a. The surface 86 of tube 82 forms the opposing surfaces of zone 50a. As in the previous embodiment, the ratio l/w is between 2.5 and 10.0.

The reason why the diverting aperture 70 directs a portion of the flow into the second zone is not completely understood. However, the following description of the flow patterns for the embodiment of Figs. 5A—5C and 6A—6C is believed to aid understanding. Member 14A has been broken away for this purpose in Figs. 5A—5C, leaving the liquid in position as it would be if the member 14a were fully in place.

It is believed that the described configuration permits coalescence of the liquid within the aperture as illustrated in Figs. 5A to 5C (and 6A to 6C). As meniscus 31 (Fig. 5A) reaches aperture 70a, it moves past the sides 69a thereof as though to bypass it. However, a portion 31' of the meniscus moves into the aperture at corners 72a (Fig. 6A). As meniscus 31 continues to advance (Figs. 5B and 6B) it tries to close upon itself in the direction of arrows 74. However, because of the shape selected for aperture 70a, the liquid coalesces and starts to fill aperture 70a and zone 50a. Air is pushed out of aperture 70a in the direction of arrow 76. Finally, before meniscus 31 completely closes on itself—arrows 78 (Fig. 5C)—aperture 70a fills up and all of surface 86 of member 82 located immediately below the surface 20 of the first zone, e.g., at the level of point 79 (Fig. 6C) is completely wetted. It will be appreciated that the advancing portion of the new meniscus 80 (Fig. 6C) has already wrapped itself around most of surface 86 at the point in time depicted, so that when coming together of the meniscus portions in the regions of arrows 78 occurs, coalescence of the liquid in aperture 80 in zone 50a below surface 20a is complete. Point 79 becomes a line of intersection between the meniscus and surface 86, below first zone surface 20a. A new meniscus 80 has thus formed in zone 50a, and continues to advance through that zone.

If aperture 70a were as wide as it is long, e.g., if it were circular, then meniscus 31 (Fig. 5B) would tend to close on itself before coalescence occurred and before the liquid filled aperture 70a and completely wetted surfaces 86. That is, coalescence would not occur at point 79 before the closure of the meniscus 31. The result would be a halt of the new meniscus at the aperture and zone 50a would not be filled.

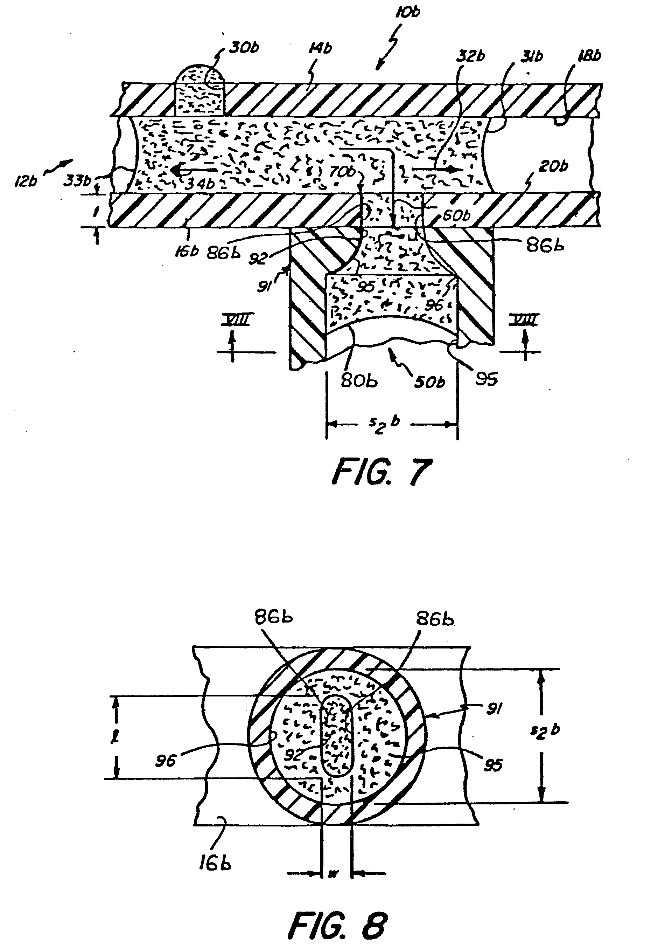

An advantage in having opposing members of the second zone extend through to the first zone (Figs. 2 and 6A—6C) is that such members can have surfaces with different contact angles compared to the opposing surfaces of the first zone, as an aid to flow within the zone. However, it is not critical that the opposing surfaces of the second zone extend all the way through the one member of the first zone to which they are attached. Furthermore, spacing between the opposing surfaces of the second zone need not be maintained constant, but can be increased or decreased. Both of these features are illustrated in the embodiment of Figs. 7 and 8. Parts similar to those previously described bear the same reference numeral to which the distinguishing suffix "b" is appended. Thus, device 10b (Fig. 7) comprises zone 12b formed by opposing surfaces 18b and 20b of members 14b and 16b, and aperture 30b permits introduction of liquid. Menisci 31b and 33b form and flow in directions of arrows 32b and 34b, as in the previous embodiments. However, diverting aperture 70b that leads to zone 50b is the aperture in member 16b, shaped substantially the same as aperture 70a (Fig. 5A) with opposing surfaces 86b. Surfaces 86b of zone 50b are continued by the interior surfaces 95 of a hollow member 91 that is underneath member 16b. Member 91 has an aperture 92, formed at the end of interior surface 95, that is identical in shape and size to aperture 70b. Inside member 91, surfaces 95 diverge and become cylindrical (Fig. 8). The dimension $s_2b$, which in this embodiment is the diameter of the cylindrical surfaces 95, is greater than either width w or length l of apertures 92 and 70b. Dimension $s_2b$ is such that there is capillary flow along the bore of hollow member 91.

An important feature of surface 95 in the transition from the oblong aperture 70b to the cylindrical surface in the member 91 is that it occurs gradually with no exterior corners such as would form energy barriers to the flow of meniscus 80b. However, interior corners such as that at the junction 96 of the transition surface 95 and the cylindrical surface do not create such barriers.

The transition surface can extend for any desired portion of the length of zone 50b.

As is apparent, a portion of the liquid flows, as indicated by arrow 60b, through diverting aperture 70b into zone 50b.

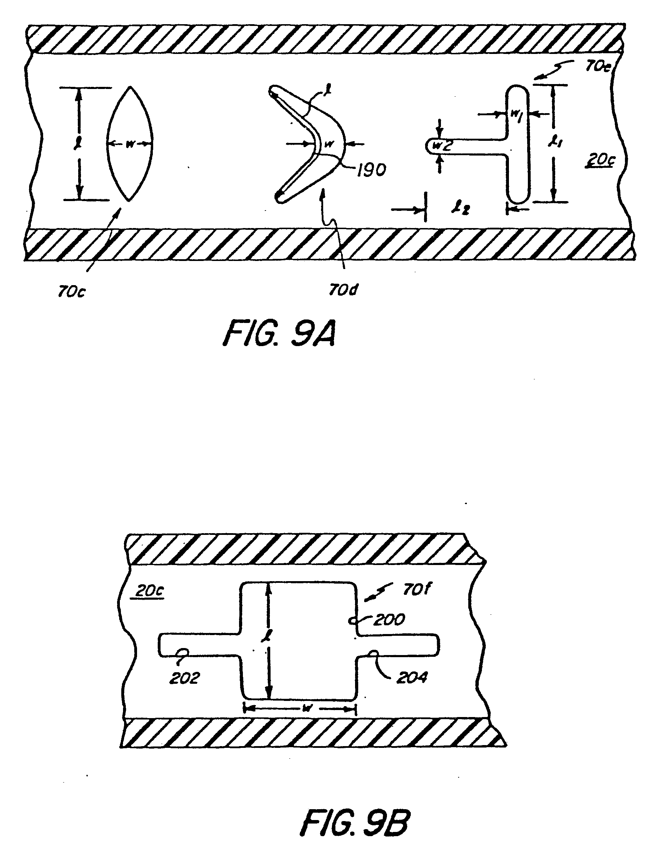

Reference is now made to Fig. 9A. A variety of shapes are useful for the diverting aperture. Parts similar to those previously described bear the same reference numeral to which the distinguishing suffix "c", "d", or "e" is appended. Thus, surface 20c includes a diverting aperture 70c that has the shape of two concave surfaces of constant radii of curvature intersecting at two relatively sharp apexes, as shown in Fig. 9A. The ratio of "l" to "w" is in the range noted above. This is currently the most preferred shape of the diverting aperture because this shape can tolerate greater values of w than can apertures such as aperture 70. Specifically, whereas aperture 70c can have a width w up to about 3.0 mm, width w of aperture 70 is preferably less than that, for example, no greater than about 1 mm. Tubular walls (not shown) extend below surface 20c as a continuation of the zone initiated by aperture 70c.

The above-described diverting apertures have cross-sectional shapes that provide only concave surfaces, to the extent they are curved at all. Diverting aperture 70d is an example of a useful aperture with a convex surface 190. In such a shape, l is more properly measured as a total length of the cross-sectional flow-through area. The aperture is considered to be a simple aperture as the first derivative of the curvature of surface 190 does not change abruptly.

The diverting aperture can be a compound aperture, for example aperture 70e, with more than one flow portion. In such a case, each flow portion must have a cross-sectional flow-through area which is 0.2 mm² or less. Providing this is the case, flow in that flow portion can be expected to occur, regardless of the ratio of length to width for that portion. If however the flow-through area is greater than 0.2 mm², then the length and width of that portion are designed to provide a ratio l/w that conforms to the range noted above.

The apertures of Fig. 9A demonstrate that given a total flow-through area greater than 0.2 mm², the shapes that work best are those that approximate aperture 70 of Figs. 1 and 2, that is, are relatively long and thin when measured transverse to flow. Conversely, those apertures that tend not to work are those that approximate the shape of a square or circle. For example, a regular five-pointed star is unsatisfactory as it approximates more the shape of a square than it does a rectangle having a length at least 2.5 times the width. The aperture 70f of Fig. 9B is an example of an aperture that is inoperative for purposes of diverting liquid flow into the second zone. Such aperture has flow portions 200, 202 and 204, as determined by lines (not shown) that can be drawn to connect the interior corners. Assuming that flow portion 200 has a cross-sectional flow-through area in excess of 0.2 mm², the ratio l/w for aperture 200 does not conform to the range of from about 2.5 to about 10.0. Instead l/w is about equal to unity. The presence of elongate portions 202 and 204 extending from portion 200 does not correct the deficiency, even though if used by themselves, portions 202 or 204 would be operative. The effect of such aperture 70f is to obtain, initial flow partway into portions 202 and 204, but not portion 200. For that reason, the liquid does not completely wet the surfaces of the second zone downstream from aperture 70f, and does not continue to flow within the second zone.

On the other hand, if portion 200 were designed to have a cross-sectional flow-through area no greater than 0.2 mm², then aperture 70f would be operative.

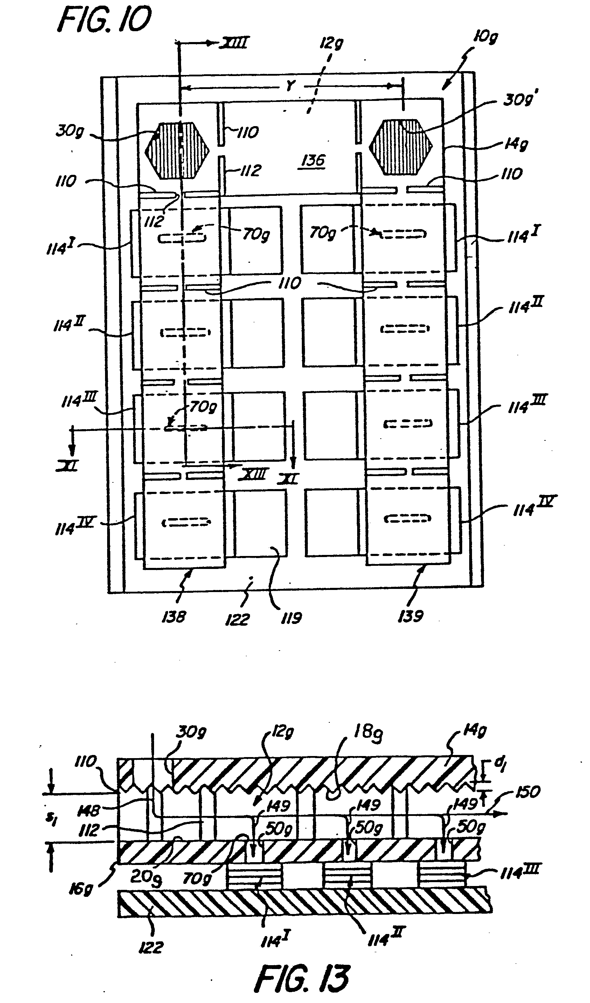

Once the liquid flows into any of the transport zones, a variety of functions are performable on the liquid at different locations within the zone or zones. For example, test elements of various kinds can be disposed at test loci in the zones for contact with the liquid. Figs. 10—13 illustrate a highly preferred form of such test elements, comprising ion-selective electrodes hereinafter "ISE's", for evaluating the activity, and therefore, the concentration, of electrolytes in the liquid. Parts similar to those previously described bear the same reference numeral to which the distinguishing suffix "g" has been attached.

Thus, device 10g comprises a first transport zone 12g (Fig. 13) that is an ion bridge extending between and connecting matched pairs of ISE's 114', 114'', 114''', and 114ᴵⱽ. Each of the ISE's is disposed in its own branch transport zone extending separately from zone 12g, as described hereinafter.

More specifically, each of the ISE pairs is mounted, as by adhesive, on a frame 122, and the pairs are connected by the ion bridge formed by the transport device 10g which comprises members 14g and 16g having opposed surfaces 18g and 20g (Fig. 11) as described for the previous embodiments. Preferably, at least surface 18g is provided with parallel grooves (Figs. 11 and 13). A pair of liquid access apertures 30g and 30g' are formed in member 14g, preferably shaped as a hexagon, as shown in Fig. 10. To retard flow of liquid after it is introduced into the access apertures, gating walls 110 are formed within zone 12g, each with a gating aperture 112.

The paired ISE's are disposed in a plurality of transport zones 50g extending from surface apertures 70g (Figs. 11 and 13). In this embodiment, these zones extend only the thickness "t" of member 16g (Fig. 11) because the ISE's are adhered to the undersurface of member 16g . The opposing surfaces of zone 50g are the opposing surfaces 86g of the hole through member 16g which hole has aperture 70g at its upper end.

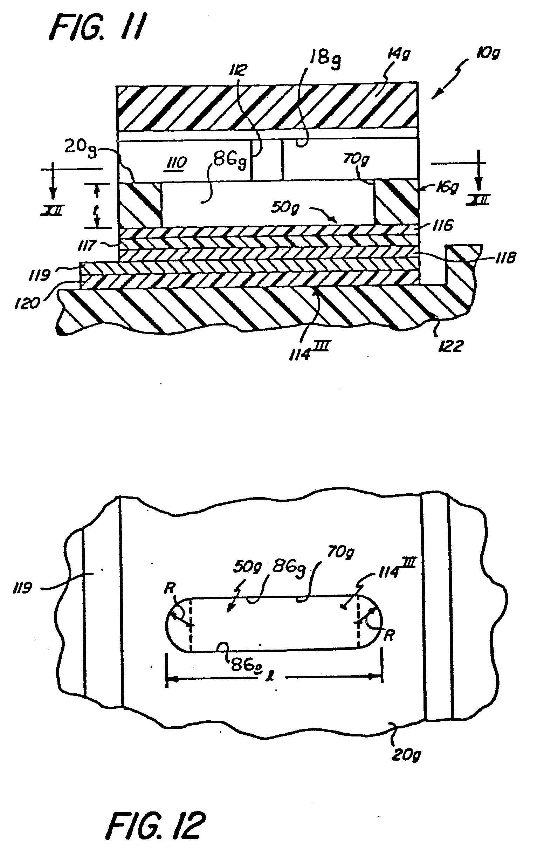

As with the previous embodiments, aperture 70g has a length l (Fig. 12) that is greater than the width w here equal to twice the radius R. Most preferably, the same ratio range described above applies to the ratio of l and 2R.

Each ISE is a generally flat multilayered element comprising three or more adjacent layers 116—120 (Fig. 11). A quantity of whole blood or serum makes contact with, for example, layer 116, after having traversed zones 12g and 50g from one of the apertures, for example, aperture 30g. Layer 116 is an ion-selective membrane containing an ionophore and a solvent, so that the ion Z⊕ of choice is carried or otherwise effectively penetrates to the underlying layers 117 and 118 where an electrical potential is generated proportional to the activity of that particular ion. Layer 117, in one embodiment, is a dried hydrophilic binder containing the salt Z⊕X⊖. Layer 118 in such instances is the X⊖ salt of an electrically conductive metal M⊕, and metal M° forms layer 119. Because layer 119 is an electrically conductive layer, a potential is measurable by an electrometer (not shown) via probes which contact layer 119. Because the ISE's are paired, the other member of the pair is contacted with a reference liquid having a known activity of the electrolyte in question. Such reference liquid is transported simultaneously from the other aperture, for example, aperture 30g', through zones 12g and 50g. The reference liquid and blood or blood serum flow together at portion 136 of zone 12g (Fig. 10) to form a junction, permitting the electrical readings to be made. Any difference in the potentials measured at the paired electrodes is due to the two different ion activities of the two liquids. The difference is registered as a difference potential on the electrometer and converted into a measure of concentration of the ionic analyte Z⊕, as is conventional.

If the ISE pair is to measure Cl⊖, layers 116 and 117 are preferably replaced by an interferant-barrier overcoat layer. Such a layer comprises, for example, cellulose acetate containing a polyol.

It will be appreciated that each of the electrode pairs is specific to the analysis of a different one of the analytes. For the differential mode of measurement, each ISE of any pair is identical to the other of the pair. Thus, the two electrodes for one electrode pair 114ᴵ is constructed and adapted to detect K⊕, the two electrodes for pair 114ᴵᴵ and to detect Na⊕, the two electrodes for pair 114ᴵᴵᴵ to detect Cl⊖, and the two electrodes for pair 114ᴵⱽ to detect HCO₃⊖. The chemistries of the layers of the electrodes are not part of the present invention, and comprise generally that described above for ion Z⊕ with the appropriate selection of an ionophore for layer 116. For example, in the case of the K⊕ electrodes, layer 116 contains an ionophore such as valinomycin or one of the others listed in *Research Disclosure*, Vol. 161, Publication No. 16113, Sept. 1977, 2nd col. of p. 32, published by Industrial Opportunities Limited, Homewell, Havant Hampshire PO9 1EF, United Kingdom. For the Na⊕ electrodes, the ionophore is preferably methyl monensin, and for HCO₃⊖ the ionophore is preferably 4-octyl trifluoroacetophenone and the solvent is trioctyl propylammonium chloride. For the Cl⊖ electrodes, layers 116 and 117 are replaced as described earlier.

In use, a quantity of sample to be tested is deposited, preferably as a drop, in one of apertures 30g and 30g' and a quantity of reference liquid in the other. The liquids spread by capillary action in a flow pattern that is partially shown by arrows 148 and 149 (Fig. 13).

That is, the liquid introduced at the locus provided by aperture 30g, flows through zone 12g, and a portion then flows into each of the apertures 70g and into zones 50g while the remainder continues to flow within zone 12g, arrow 150. The liquid also flows into portion 136 (Fig. 10) to contact the reference liquid deposited at 30g'. The reference liquid also contacts its ISE's positioned adjacent to the opposite branch of the ion bridge.

To vent displaced air at least portions of the edges 138 and 139 (Fig. 10) of members 14g and 16g are left open to the atmosphere. No additional vent means, such as apertures, are necessary for zones 50g due to the short distance t (Fig. 11) traversed in zones 50g. However, such apertures are preferred if the length of zones 50g is extended. Dimension t is preferably no larger than about 100 microns if no vent apertures are present.

In the transport of the blood serum, such as in the use described in the embodiment of Figs. 10—13, it is preferred that the dimensions of the device be chosen as follows. For a grooved plastic surface 18g having a groove depth $d_1$ of between about 3 and about 14 microns (Fig. 13) the effective spacing $s_1$ between the two surfaces can be varied between about 0.05 mm and about 0.5 mm for best results. Highly preferred values are between about 0.125 mm and about 0.25 mm. Lesser values of $s_1$ are useful, except that when the separation distance $s_1$ approaches zero, spreading through the zone becomes extremely slow.

If grooves are used at all, a preferred range for the width of the grooves is between about 5 microns and about 5 mm, it being noted that beyond about 5 mm, the rate and direction of spreading becomes insignificantly different from the results achieved by a nominally smooth surface.

A representative example for the above-described potentiometric analysis of blood serum is as follows:

Example
  $s_1$=100 microns
  $d_1$=6.8 microns
  l=2.0 mm
  R=0.2 mm
  t=75 microns

Distance y between apertures 30g and 30g', (Figure 10)=10 mm.

Preferred materials for at least the opposing surfaces of the members of either the first or second zone are non-fibrous materials that are substantially impervious to blood serum. Examples of such materials include acetates such as cellulosic triacetate, cellulose acetate propionate, and cellulose acetate butyrate; polystyrene; polyethylene; polypropylene; ABS plastic; and polycarbonate. Such surface materials permit various chemical coatings to be applied, if desired for example, surfactants.

It will be appreciated that a significant advantage of the construction of the ion bridge as described above is its generally open configuration in an enclosed environment that nevertheless provides a controlled flow. Such a configuration leaves ample room for the flow of whole blood, unlike ion bridges which utilize porous adsorbent means with void volumes less than about 50%. Furthermore, the materials described in the preceding paragraph, by being free of fibres, avoid the possibility of shorting out the ISE's.

Because the total environment is generally a closed one, evaporation from, and contamination of, zone 12g are minimized. Dissolved gases tend to be retained in the liquid transported, particularly when the lateral distance x (Fig. 2) between the access aperture and the second transport zones, is at least 1 cm. Such prevention of gas loss is particularly important if a dissolved gas is being tested, for example, $HCO_3^{\ominus}$ tested using ISE's of Fig. 10.

**Claims**

1. A liquid transport device comprising two surfaces (18, 18b, g, 20, 20a, b, c, g) bounding a first zone (12, 12a, b, g) through which liquid may flow by virtue of capillary attraction between the liquid and the surfaces bounding the said first zone characterized by a second zone (50, 50a, b, g) through which liquid may flow by virtue of capillary attraction between the liquid and the surfaces (56, 58, 86, 86b, g, 95) bounding the second zone, the second zone being in communication with the first zone through an aperture (70, 70a—e, g) which is located in the plane of one surface bounding the first zone, and by the aperture being so configured as to ensure complete wetting of the surfaces bounding the second zone downstream of the aperture and having an area greater than 0.2 mm².

2. A liquid transport device according to claim 1, characterized in that the aperture (70e) has at least two flow portions, that each of said portions either

a) has a ratio of length ($l_1$, $l_2$) to width, ($w_1$, $w_2$, measured in a plane transverse to the direction of liquid flow through the flow portion, between 2.5 and 10.0, or

b) has a cross-sectional flow-through area no greater than 0.2 mm², whereby liquid will completely fill said aperture and flow therethrough while liquid flow continues in the first zone.

3. A liquid transport device according to claim 1 or 2, characterized by a test element (71, 114I—IV) in the second zone for testing the liquid.

4. A liquid transport device according to claim 3, characterized in that the test element

(71, 114I—IV) is disposed adjacent the aperture.

5. A liquid transport device according to claim 3 or 4, characterized in that the test element (71, 114I—IV) is an ion-selective electrode.

6. A liquid transport device according to claim 1, 2, 3, 4 or 5, characterized in that the direction (60, 60b, 149) of liquid flow through the aperture (70, 70a—e, g) is generally perpendicular to the direction (32, 32b, 34, 34b, 150) of liquid flow through the first zone (12, 12a, b, g) adjacent the aperture.

## Revendications

1. Dispositif de déplacement de liquide comprenant deux surfaces (18, 18b, g, 20, 20a, b, c, g) délimitant une première zone (12, 12a, b, g) au travers de laquelle du liquide peut s'écouler en raison de l'attraction capillaire entre ce liquide et les surfaces délimitant la dite première zone, caractérisé par une seconde zone (50, 50a, b, g) au travers de laquelle du liquide peut s'écouler en raison de l'attraction capillaire entre ce liquide et les surfaces (56, 58, 86, 86b, g, 95) délimitant la seconde zone; la seconde zone étant en communication avec la première zone par l'intermédiaire d'une ouverture (70, 70a—e, g) qui est située dans le plan d'une surface délimitant la première zone, et par le fait que l'ouverture a une configuration propre à assurer le mouillage complet des surfaces délimitant la seconde zone en aval de l'ouverture, celle-ci ayant une superficie supérieure à 0,2 mm².

2. Dispositif de déplacement de liquide suivant la revendication 1, caractérisé en ce que l'ouverture (70e) a au moins deux parties d'écoulement, et en ce que chacune de ces parties, ou bien

a) a un rapport de la longueur ($l_1$, $l_2$) à la largeur ($w_1$, $w_2$), mesurées dans un plan transversal à la direction de l'écoulement du liquide au travers de la partie d'écoulement, compris entre 2,5 et 10,0, ou bien

b) a une section transversale d'écoulement dont la superficie n'est pas supérieure à 0,2 mm², si bien que du liquide emplira complètement la dite ouverture et s'écoulera à travers elle tandis que l'écoulement de liquide continue dans la première zone.

3. Dispositif de déplacement de liquide suivant la revendication 1 ou 2, caractérisé par un produit d'analyse (71, 114 I—IV) dans la seconde zone pour analyser le liquide.

4. Dispositif de déplacement de liquide suivant la revendication 3, caractérisé en ce que le produit d'analyse (71, 114 I—IV) est disposé au voisinage de l'ouverture.

5. Dispositif de déplacement de liquide suivant la revendication 3 ou 4, caractérisé en ce que le produit d'analyse (71, 114I—IV) est une électrode sélective d'ions.

6. Dispositif de déplacement de liquide suivant la revendication 1, 2, 3, 4 ou 5, caractérisé en ce que la direction (60, 60b, 149) d'écoulement du liquide au travers de l'ouverture (70, 70a—e, g) est généralement perpendiculaire à la direction (32, 32b, 34, 34b, 150) d'écoulement du liquide au travers de la première zone (12, 12a, b, g) au voisinage de l'ouverture.

## Patentansprüche

1. Flüssigkeitstransportvorrichtung mit zwei Flächen (18, 18b, g, 20, 20a, b, c, g), die eine erste Zone (12, 12a, b, g) begrenzen, durch die eine Flüssigkeit aufgrund der Kapillarwirkung zwischen der Flüssigkeit und den die erste Zone begrenzenden Flächen fließen kann, dadurch gekennzeichnet, daß eine zweite Zone (50, 50a, b, g) vorgesehen ist, durch die eine Flüssigkeit aufgrund der Kapillarwirkung zwischen der Flüssigkeit und den die zweite Zone begrenzenden Flächen (56, 58, 86, 86b, g, 95) fließen kann, wobei die zweite Zone mit der ersten Zone über eine Öffnung (70, 70a—e, g) verbunden ist, die sich in der Ebene der einen Begrenzungsfläche der ersten Zone befindet, und daß die Öffnung so ausgebildet ist, daß eine vollständige Befeuchtung der Begrenzungsflächen der zweiten Zone unterhalb der Öffnung gewährleistet ist und die Öffnung einen Flächenbereich von mehr als 0,2 mm² umfaßt.

2. Flüssigkeitstransportvorrichtung nach Anspruch 1, dadurch gekennzeichnet, daß die Öffnung (70e) mindestens zwei Durchflußabschnitte aufweist, und daß jeder dieser Abschnitte

a) entweder ein Verhältnis von Länge ($l_1$, $l_2$) zu Breite ($w_1$, $w_2$) zwischen 2,5 und 10,0 aufweist, welches in einer Ebene quer zur Strömungsrichtung der Flüssigkeit durch den Durchflußabschnitt gemessen wird, oder

b) eine Durchflußquerschnittsfläche von höchstens 0,2 mm² aufweist, wodurch Flüssigkeit diese Öffnung vollständig ausfüllt und hindurchfließt, während die Flüssigkeitsströmung in der ersten Zone anhält.

3. Flüssigkeitstransportvorrichtung nach einem der Ansprüche 1 oder 2, gekennzeichnet durch ein Testelement (71, 114I—IV) zum Analysieren der Flüssigkeit in der zweiten Zone.

4. Flüssigkeitstransportvorrichtung nach Anspruch 3, dadurch gekennzeichnet, daß das Testelement (71, 114I—IV) benachbart der Öffnung angeordnet ist.

5. Flüssigkeitstransportvorrichtung nach einem der Ansprüche 3 oder 4, dadurch gekennzeichnet, daß das Testelement (71, 114I—IV) eine Ionen selektierende Elektrode ist.

6. Flüssigkeitstransportvorrichtung nach einem der Ansprüche 1, 2, 3, 4 oder 5, dadurch gekennzeichnet, daß die Strömungsrichtung (60, 60b, 149) der Flüssigkeit durch die Öffnung (70, 70a—e, g) im allgemeinen senkrecht zur Strömungsrichtung (32, 32b, 34, 34b, 150) der Flüssigkeit durch die erste, der Öffnung benachbarte Zone (12, 12a, b, g) verläuft.

FIG. 2

FIG. 1

FIG. 3

FIG. 4

0 023 157

## FIG. 5A

## FIG. 6A

## FIG. 5B

## FIG. 6B

## FIG. 5C

## FIG. 6C

2

0 023 157

FIG. 7

FIG. 8

3

FIG. 9A

FIG. 9B

4

FIG. 10

FIG. 13

*FIG. 11*

*FIG. 12*